# EUROPÄISCHE PATENTSCHRIFT

(11) **EP 0 491 067 B1**
(45) Veröffentlichungstag und Bekanntmachung des Hinweises auf die Patenterteilung: **08.06.1994**
(21) Anmeldenummer: 90124487.1
(22) Anmeldetag: 18.12.1990
(51) Int. Cl.: B23B 5/32

(54) **Verfahren zur Begrenzung eines Schlupfes**
Slip limiting process
Procédé pour la limitation d'un glissement

(43) Veröffentlichungstag der Anmeldung: 24.06.1992
(73) Patentinhaber: Wilhelm Hegenscheidt Gesellschaft mbH, D-41804 Erkelenz (DE)
(72) Erfinder: Heimann,Alfred,Dr.-Ing., W-5100 Aachen (DE)
(74) Vertreter: Mayer-Pohske, Joachim-Wolfgang Rechtsanwälte Dr. Dettmeier & Partner

(56) Entgegenhaltungen:
- DE-C- 3 823 832
- DE-U- 1 867 732

## Beschreibung

Die Erfindung betrifft ein Verfahren zur Begrenzung des Schlupfes zwischen Antriebsreibrolle und Werkstück beim Zerspanen mit einem einstellbaren Spanquerschnitt mittels eines eine Vorschubbewegung mit einer vorgebbaren Vorschubgeschwindigkeit ausführenden Drehwerkzeuges auf einer Drehmaschine mit Reibrollenantrieb auf einen vorgebbaren Wert, wobei während des Antreibens der zwischen mindestens einer Antriebsreibrolle und dem Werkstück auftretende Schlupf ermittelt wird, worauf bei Überschreiten eines vorgegebenen Wertes des Schlupfes die Vorschubgeschwindigkeit des Bearbeitungswerkzeuges beeinflußt wird.

Ein Verfahren der oben beschriebenen Art ist bereits bekannt geworden mit der DE-PS 38 23 832. Diese Maschine ist eine Unterflurradsatzdrehmaschine zum Reprofilieren der Räder von Eisenbahnradsätzen auf der die Räder eines zu reprofilierenden Radsatzes von Antriebsreibrollen angetrieben werden. Die Maschine weist eine Einrichtung zur Ermittlung des zwischen Antriebsreibrollen und den Rädern eines Radsatzes auftretenden Schlupfes auf. Es wird hierbei die Umfangsgeschwindigkeit der Antriebsreibrolle und die Umfangsgeschwindigkeit des von dieser Reibrolle angetriebenen Rades gemessen und aus dem entsprechenden Quotienten der auftretende Schlupf berechnet. Tritt kein Schlupf auf, so ist der Quotient 1. Wird jedoch der Quotient kleiner als 1, so ist Schlupf vorhanden. Hat der Schlupf eine optimale Größe erreicht, so soll die bekannte Einrichtung ein unerwünscht großes Durchrutschen der Antriebsreibrollen am Umfang der Räder durch angepaßte Reduzierung der Vorschubgeschwindigkeit der Supporte verhindern.

Eine Reduzierung der Vorschubgeschwindigkeit der Supporte in dieser bekannten Weise kann jedoch ein Schlüpfen der Antriebsreibrollen an den Rädern eines Radsatzes beim Zerspanen nicht verhindern, denn in dem Augenblick, in dem unzulässiger Schlupf ermittelt wird, nämlich der Grenzkraftschluß überschritten wird, steht die volle Spanungsdicke, die durch den Vorschub vorgegeben ist, am Bearbeitungswerkzeug an und bremst den Radsatz ab. Wird nun, wie im Stand der Technik vorgeschlagen, die Vorschubgeschwindigkeit reduziert, steht immer noch die volle Spanungsdicke am Bearbeitungswerkzeug an, denn die vorgegebene Spanungsdicke nimmt, wenn die Vorschubgeschwindigkeit reduziert wird, erst allmählich mit fortlaufendem Schnitt ab. Eine Reduzierung der Spanungsdicke im Augenblick des Schlüpfens der Antriebsreibrolle wird nicht erreicht und damit auch keine Verringerung der Schnittkraft, die ja den Radsatz abbremst. Wird die Vorschubgeschwindigkeit als Reaktion auf einen zu großen Schlupf reduziert, so stellt sich infolgedessen nach einiger Zeit ein neues Gleichgewicht mit einer neuen Schlupfgröße ein. Während dieser Zeit wird mit ungünstigen Schlupfdaten gearbeitet. Die Regelung ist also träge. Eine Reaktion auf zu großen Schlupf in Bereichen größerer Härte des Werkstückes ist nicht wirksam möglich. Tritt gar unmittelbar vor einem Bereich größerer Härte unzulässiger Schlupf auf, so tritt trotz der Reduzierung der Vorschubgeschwindigkeit in diesem Bereich größerer Härte ein totales Durchrutschen der Reibrolle auf.

Ausgehend von dieser Situation liegt der Erfindung die Aufgabe zugrunde, ein Verfahren der eingangs beschriebenen Art sowie eine Vorrichtung zur Durchführung dieses Verfahrens vorzuschlagen, das oder die eine wesentlich schnellere Beseitigung eines unzulässig großen Schlupfes erlaubt auch dann, wenn in einem regelungsbedürftigen Grenzschlupfbereich sich ein Werkstoffbereich höherer Festigkeit oder Härte anschließt..

Ausgehend von einem Verfahren der eingangs beschriebenen Art wird diese Aufgabe dadurch gelöst, daß bei Überschreitung eines vorgegebenen Wertes des Schlupfes der Spanquerschnitt mindestens für die Dauer eines Teiles einer Umdrehung eines Werkstücks durch entsprechende Änderung mindestens der Bewegungsrichtung der Vorschubbewegung des Drehwerkzeuges verringert wird, wobei sich das Drehwerkzeug in der geänderten Bewegungsrichtung mit vorgegebenem Geschwindigkeitsbetrag bewegt, mindestens solange, bis eine zulässige Größe des Schlupfes erreicht ist.

Es ist somit zu erkennen, daß das Mittel der Geschwindigkeitsverlangsamung des Vorschubes nicht zu einer sofortigen Entlastung führt. Vielmehr muß die Vorschubrichtung so beeinflußt, z.B. umgekehrt, werden, daß sofort dann, wenn ein unzulässig großer Schlupf ermittelt wird, auch sofort die Spandicke vermindert wird, so daß eine sofortige Entlastung eintritt. Es ist dann nicht mehr erforderlich mit den ermittelten ungünstigen Daten bzgl. des unzulässigen Schlupfes noch über eine in der Regel relativ große Distanz am Umfang des Werkstückes zu fahren bis die erwünschte Wirkung eintritt. Die vorgeschlagenen Maßnahmen haben eine sofortige Entlastung zur Folge, so daß der Bereich des zu großen Schlupfes augenblicklich verlassen wird. Da die momentanen Schlupfgrößen sehr schnell ermittelbar sind, kann trotz des schnellen Rückzuges des Werkzeuges zur Spandickenverminderung auch gleichzeitig die sich ändernde Schlupfgröße festgestellt werden, so daß eine weitere unnötige Spandickenminderung verhindert werden kann. Bleibt der Schlupf jedoch trotz Spandickenminderung unverändert oder vergrößert er sich gar, so wird eine sofortige weitere Spandickenminderung und damit eine weitere Entlastung herbeigeführt.

Nach einer Ausgestaltung der Erfindung wird vorgeschlagen, daß die Änderung der Bewegungsrichtung der Vorschubbewegung des Drehwerkzeuges für eine vorgegebene Zeitdauer oder über eine vorgegebene Wegstrecke beibehalten wird. Hier wird eine Erfahrungsgröße ausgenutzt, so daß mit relativ einfachen Mitteln eine schnelle Reaktion auf zu großen Schlupf möglich ist. Es ist nämlich, wie vorgeschlagen, einfach möglich, das Drehwerkzeug für eine vorgegebene Zeitdauer in eine andere Richtung zu fahren. Daraus ist, wenn gleichzeitig die Geschwindigkeit festgelegt wird, die Spandickenminderung herleitbar. Ebenso kann natürlich das Werkzeug einfach über eine vorgegebene Wegstrecke in Richtung einer Spandickenminderung gefahren werden. Die Schnelligkeit der Reaktion auf einen zu großen Schlupf kann dann mit Hilfe der entsprechenden Geschwindigkeit in der notwendigen Bewegungsrichtung eingestellt werden. Es sei in diesem Zusammenhang darauf hingewiesen, daß es genau genommen nicht auf eine Spandickenminderung sondern auf eine Spanquerschnittsminderung ankommt. Jede Spandickenminderung ist allerdings gleichzeitig auch eine Spanquerschnittsminderung nicht aber umgekehrt.

Eine ergänzende Ausgestaltung sieht vor, daß der Spanquerschnitt um mindestens 5% verringert wird. Häufig reicht eine sehr schnelle Verringerung um diesen geringen Betrag bereits aus, um den ermittelten kritischen Wert zu unterschreiten.

Ergänzend ist noch vorgeschlagen, daß die Bewegung des Drehwerkzeuges in der geänderten Bewegungsrichtung für die Dauer höchstens eines Teiles einer Umdrehung eines Werkstückes beibehalten wird. Aufgrund der Tatsache, daß erfindungsgemäß eine Veränderung der Bewegungsrichtung des Drehwerkzeuges und nicht nur eine Veränderung der Geschwindigkeit des Drehwerkzeuges bei Erreichen einer kritischen Schlupfgröße vorgenommen wird, tritt auch im Gegensatz zu den Regelungsmethoden des Standes der Technik eine sofortige Minderung der ursprünglichen Belastung ein. Die Bewegung des Drehwerkzeuges in Entlastungsrichtung kann dann noch für eine Weile beibehalten werden, bis z.B. ein unterer Grenzwert für den Schlupf erreicht ist. Um die Regelung aber nicht zu träge werden zu lassen, sollte dieser Zeitraum kleiner als eine Umdrehung des Werkstückes sein. Hierbei kann ein erster "Teilrückzug" sehr schnell und der weitere "Rückzug" langsamer erfolgen.

Das erfindungsgemäße Verfahren wird noch dadurch ergänzt, daß nach Abschluß der Verringerung des Spanquerschnittes der Spanquerschnitt langsam wieder vergrößert wird bis zur Erreichung eines oberen Grenzwertes des Schlupfes. Hierdurch wird erreicht, daß die Maschine immer zwischen einem oberen und einem unteren Grenzwert arbeitet, so daß das Übertragungsvermögen der Reibrollen nahezu optimal ausgenutzt werden kann. Natürlich kann hierbei, um eine gewünschte Oberflächenrauhigkeit am Werkstück einzuhalten, ein oberer Grenzwert der Vorschubgeschwindigkeit festgelegt werden, der unabhängig vom Ergebnis der Schlupfmessung nicht überschritten wird.

Zur Durchführung des erfindungsgemäßen Verfahrens ist eine Drehmaschine vorgeschlagen mit einer elektronischen Maschinensteuerung, mit Mitteln für die drehantreibbare Aufnahme eines Werkstückes sowie mit mindestens einer Antriebsreibrolle für den Drehantrieb des Werkstückes, mit mindestens einem Schlittenträger mit je über einen von einem mit der Maschinensteuerung verbundenen Motorregler geregelten Motor angetriebene Schlitten zur Bewegung eines Drehwerkzeuges in zwei zueinander senkrechten Achsen und mit mindestens einer Einrichtung zur Ermittlung des zwischen mindestens einer Antriebsreibrolle und dem Werkstück auftretenden Schlupfes, die mit der elektronischen eine CNC-Steuerung umfassenden Maschinensteuerung verbunden ist, sowie mit Mitteln zur Beeinflussung der Vorschubgeschwindigkeit des Drehwerkzeuges, bei der die Motoren einen mit der CNC-Steuerung über eine Leitung verbundenen Encoder aufweisen, wobei in mindestens einer diesen Leitungen ein Impulsmischer vorgesehen ist und wobei die Maschinensteuerung eine PLC-Steuerung aufweist, die ebenfalls mit dem Impulsmischer verbunden ist, so daß der Impulsmischer Anweisungen von der PLC-Steuerung erhalten kann. Bei einer solchen Einrichtung kann auf die ermittelte Schlupfgröße sehr rasch dadurch reagiert werden, daß der Impulsmischer Impulse in einer solchen Art und Zahl beimischt oder rückmischt, daß sich die Richtung der vorherigen Vorschubbewegung des Werkzeuges in eine gewünschte Richtung verändert. Die beigemischten Impulse können somit auch wieder rückgemischt werden, wodurch das Drehwerkzeug z.B. wieder in seine Ausgangsposition zurückgefahren werden kann.

Die Erfindung soll nun anhand der beigefügten Zeichnungen näher erläutert werden. Es zeigen:
- Figur 1: schematische Darstellung eines Schnittverlaufs
- Figur 2: Darstellung wie Figur 1, jedoch mit geändertem Schnittverlauf
- Figur 3: Verschaltungsschema mit Maschinenschema
- Figur 4: Verschaltungsschema mit Maschinenschema
- Figur 5: Radprofil mit Drehwerkzeug in Arbeitsposition

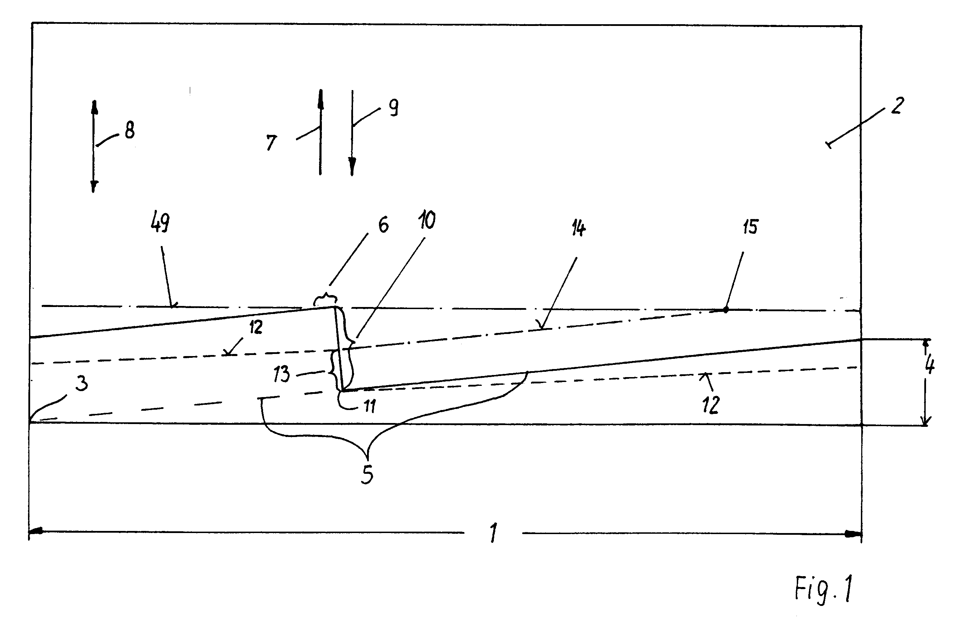

In Figur 1 ist der Schnittverlauf eines nicht dargestellten Bearbeitungswerkzeuges am Umfang 1 eines Werkstückes 2 dargestellt. Bei dem Werkstück 2 handelt es sich um ein beliebiges zylindrisches Werkstück, dessen Umfangsfläche abgewickelt ist. Der Anschnitt soll in der Ecke 3 und mit einer Programmierten Vorschubgeschwindigkeit in vorgegebener Richtung erfolgen, so daß das Werkzeug z.B. nach einer Werkstückumdrehung die Strecke 4 zurückgelegt hat. Natürlich kann auch die Kontur, die das Werkzeug auf seinem Weg am Werkstück zu erzeugen hat, programmiert sein und von der Zylinderform abweichen. Das Drehwerkzeug schneidet während einer Werkstückumdrehung entlang der Vorschubrille 5. Wird nun beispielsweise bei der nachfolgenden Werkstückumdrehung, während sich das Drehwerkzeug an der Stelle 6 befindet, ein Schlupf zwischen einer Antriebsreibrolle und dem Werkstück ermittelt, der größer ist oder größer zu werden droht als ein vorgegebener Grenzwert des Schlupfes, wird die Richtung der Vorschubgeschwindigkeit zunächst verändert. In Figur 1 soll die veränderte Richtung der Vorschubgeschwindigkeit entlang der Wegstrecke des Rückzugsweges 10 in Pfeilrichtung 9 verlaufen. Das Bearbeitungswerkzeug folgt dann dem Rückzugsweg 10 bis zur Stelle 11, an der der Rückzugsweg endet, wenn das Werkzeug vollständig außer Schnitt gebracht werden soll. Der Rückzugsweg 10 ist somit hier ebenso groß bemessen wie der Vorschubweg 4 pro Werkstückumdrehung, so daß die Spanung des Drehwerkzeuges unterbrochen ist.
Wird zusätzlich zur Richtungsänderung der Vorschubgeschwindigkeit auch der Betrag der Vorschubgeschwindigkeit geändert, beispielsweise erhöht, gelingt es, den Rückzugsweg 10 in kurzer Zeit zurückzulegen. Der Betrag der Vorschubgeschwindigkeit kann soweit erhöht werden, daß der gesamte Rückzugsweg 10 auf geringster Umfangsstrecke des Werkstücks 2 abgefahren ist. Dies kommt durch die leichte Neigung der Linie, die den Rückzugsweg 10 darstellt, zum Ausdruck.

Sobald das Drehwerkzeug den Rückzugsweg 10 durchfahren hat, kehrt die Richtung der Vorschubgeschwindigkeit wieder in die Ausgangsrichtung zurück und das Drehwerkzeug bewegt sich bei rotierendem Werkstück 2 erneut in die Pfeilrichtung 7. Dies kann betragsmäßig mit der ursprünglichen aber auch mit z.B. einer geringeren als der ursprünglichen Vorschubgeschwindigkeit erfolgen. Wird eine Vorschubgeschwindigkeit mit einem geringeren Betrag gewählt, beispielsweise eine Vorschubgeschwindigkeit mit dem halben ursprünglichen Betrag, bewegt sich das Drehwerkzeug am Umfang des Werkstücks 2 entlang der Linie 12 und erreicht nach etwa einer Werkstückumdrehung den Rückzugsweg 10. Dieser Vorschub braucht jedoch nicht gleichmäßig über eine Werkstückumdrehung zu erfolgen, sondern kann auch eben vor Erreichen der Kante des Rückzugswegs 10 erfolgen. Das Drehwerkzeug erreicht nun mit der halben Spanungsdicke 13 die Kante des Rückzugsweges 10 und die dann auftretende Schnittkraft ist geringer als die bisherige Schnittkraft bei der ursprünglichen Vorschubgeschwindigkeit. Die Spanung kann nun ab der Kante des Rückzugsweges 10 mit der halben bisherigen Spanungsdicke erfolgen. Wird jedoch kein unzulässiger Schlupf mehr ermittelt, kann der Betrag der Vorschubgeschwindigkeit erhöht und die Spanungsdicke vergrößert werden. Wird der Betrag der Vorschubgeschwindigkeit soweit vergrößert, daß die ursprüngliche Vorschubgeschwindigkeit wieder erreicht wird, verläuft der Schnitt des Drehwerkzeuges entlang der Linie 14, parallel zur Vorschubrille 5, bis nach etwa einer halben Werkstückumdrehung der Punkt 15 erreicht ist, der mit der Stelle 6 in einer gedachten Querebene 49 liegt. Das Drehwerkzeug hat jetzt eine axiale Position am Werkstück erreicht, die mit der in einem evtl. Bearbeitungsprogramm vorliegenden Position zum Zeitpunkt des Richtungswechsels des Drehwerkzeugs übereinstimmt, lediglich am Umfang des Werkstücks 2 versetzt. Von diesem Punkt 15 an kann dann die Bearbeitung nach dem programmierten Bearbeitungsprogramm fortgesetzt werden.

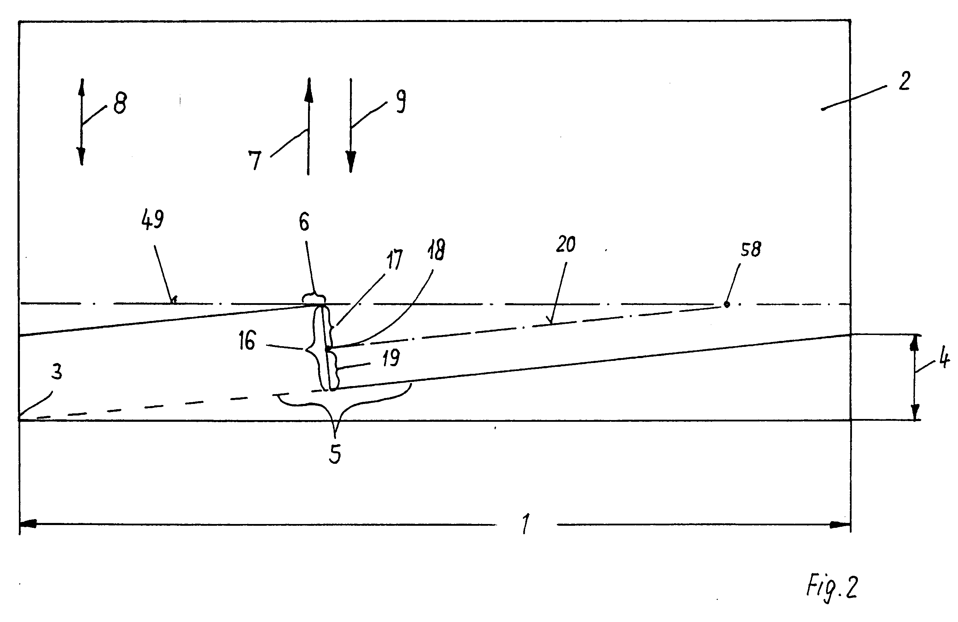

Figur 2 zeigt ebenfalls einen Schnittverlauf eines Drehwerkzeuges am Umfang 1 eines Werkstücks 2, ähnlich wie Figur 1, jedoch mit einem kürzeren Rückzugsweg 17 des Drehwerkzeuges als in Figur 1. Der Anschnitt des Werkstücks 2 erfolgt wieder in der Ecke 3 mit einer programmierten Vorschubgeschwindigkeit in Pfeilrichtung 7 der Z-Achse 8. Das Drehwerkzeug, in dieser Figur ebenfalls nicht dargestellt, schneidet während einer Werkstückumdrehung wieder entlang der Vorschubrille 5. Wird nun beispielsweise bei der nachfolgenden Werkstückumdrehung, während sich das Drehwerkwerkzeug an der Stelle 6 befindet, ein Schlupf zwischen Antriebsreibrolle und Werkstück ermittelt, der größer ist als ein vorgegebener Grenzwert des Schlupfes, wird die Richtung der Vorschubgeschwindigkeit zunächst verändert, wobei der programmierte Vorschub auf Null gestellt wird. Die veränderte Richtung der Vorschubgeschwindigkeit verläuft nun entlang der Wegstrecke des Rückzugsweges 17 in Pfeilrichtung 9. Das Drehwerkzeug folgt dann dem Rückzugsweg 17 bis zur Stelle 18, an der der Rückzugsweg endet. Der Rückzugsweg 17 des Drehwerkzeuges soll in diesem Fall dem halben Betrag des Vorschubweges 4 entsprechen. Das Drehwerkzeug wird somit von der Stelle 6 auf die Stelle 18 verlagert und die Spanungsdicke 16 ist halbiert auf die Spanungsdicke 19. Wird zusätzlich zur Richtungsänderung der Vorschubgeschwindigkeit auch der Betrag der Vorschubgeschwindigkeit geändert, beispielsweise erhöht, gelingt es den Rückzugsweg 17 in kürzester Zeit zurückzulegen. Der Betrag der Vorschubgeschwindigkeit kann auch hier soweit erhöht werden, daß der gesamte Rückzugsweg 17 auf geringster Umfangsstrecke des Werkstückes 2 abgefahren ist. Sobald das Drehwerkzeug den Rückzugsweg 17 durchfahren hat, kehrt die Richtung der Vorschubgeschwindigkeit wieder in die Ausgangsrichtung zurück und das Drehwerkzeug bewegt sich bei rotierendem Werkstück erneut in die Pfeilrichtung 7. Wird nun der Betrag der bisherigen Vorschubgeschwindigkeit beibehalten, fährt das Drehwerkzeug mit seiner Hauptschneide entlang der Linie 20, bis nach etwa einer halben Werkstückumdrehung der Punkt 58 erreicht ist, der mit der Stelle 6 wieder in einer gedachten Querebene 49 liegt. Das Bearbeitungswerkzeug hat jetzt wieder eine axiale Position am Werkstück erreicht, die mit der im Bearbeitungsprogramm vorliegenden Position bei der ersten Richtungsänderung übereinstimmt, lediglich am Umfang des Werkstückes 2 versetzt. Die Linie 20 verläuft zur Vorschubrille 5 parallel und die Spanungsdicke 19 wird dann, falls keine Änderung des Betrages der Vorschubgeschwindigkeit vorgenommen wird, während etwa einer Werkstückumdrehung abgespant, bevor wieder die ursprüngliche Spanungsdicke 16 erreicht wird.

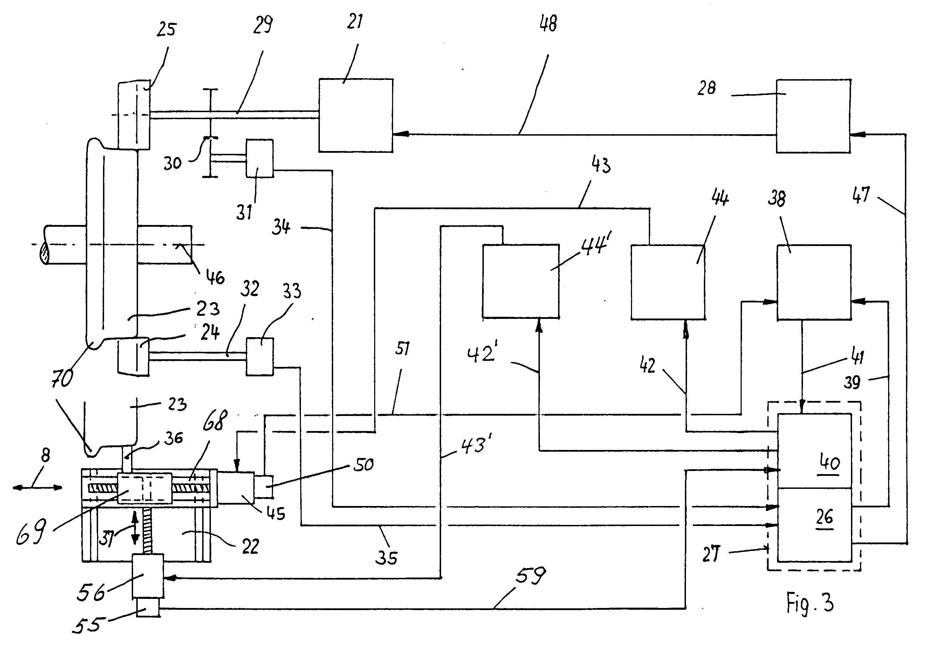

In Figur 3 ist ein Schaltschema dargestellt für eine Radsatzdrehmaschine mit Reibrollenantrieb. Das dargestellte Rad 23 eines Radsatzes ist abgestützt von Stützrollen 24 und wird rotativ angetrieben von der hier dargestellten einzelnen Antriebsrolle 25. Anstelle einer Antriebsrolle 25 können auch mehrere Antriebsrollen vorgesehen sein. Bei Unterflurradsatzdrehmaschinen werden vorzugsweise je Rad eines Radsatzes zwei Antriebsrollen verwendet. Besondere Stützrollen sind an solchen Maschinen nicht erforderlich. Ebenso werden an Felgen- und Bremsscheibendrehmaschinen mit Reibrollenantrieb, bei denen der Radsatz von Körnerspitzen aufgenommen wird, nur Antriebsreibrollen verwendet.

In dem hier dargestellten Fall ist die Stützrolle 24 gleichzeitig Bestandteil einer Schlupfmeßeinrichtung. Das Rad 23 an einem Radsatz wird mit der Antriebsrolle 25, die vom Hauptmotor 21 angetrieben wird, rotativ angetrieben. Der Hauptmotor 21 wird von der PLC-Steuerung 26, die Bestandteil der Maschinensteuerung 27 ist, über den Motorregler 28 und die Leitung 47, 48 gesteuert.
Auf der Welle 29 zwischen Antriebsreibrolle 25 und Hauptmotor 21 befindet sich ein Getriebe 30 zum Antreiben eines Impulsgebers 31, dessen Impulse über die Leitung 34 an die PLC-Steuerung 26 weitergeleitet werden. Wenn der Radsatz mit dem Rad 23 rotiert, rotiert auch die am Rad 23 angelegte Stützrolle 24. Die Stützrolle 24 ist über die Welle 32 ebenfalls mit einem Impulsgeber 33 verbunden, dessen abgegebene Impulse über die Leitung 35 ebenfalls an die PLC-Steuerung 26 weitergeleitet werden.

Befindet sich das Drehwerkzeug 36 im Schnitt am Rad 23 und tritt eine Antriebssituation auf, die eine Regelung des Schlupfes zwischen Antriebsreibrolle 25 und Rad 23 erforderlich macht, wird diese von der Schlupfmeßeinrichtung erkannt, die aus dem Getriebe 30, den Impulsgebern 31, 33, den Leitungen 34, 35 und der PLC-Steuerung 26 besteht. Tritt nämlich eine solche Antriebssituation auf, verändern sich die von den Impulsgebern 31 und 33 abgegebenen Impulszahlen derart, daß mit einer Berechnung, die von der PLC-Steuerung 26 in der Maschinensteuerung 27 durchgeführt wird, die Situation erkannt wird. Eine solche Berechnung findet mindestens während der überwiegenden Zeit der Bearbeitung statt.

Ist nun eine solche Situation erkannt, wird der Richtungssinn der Vorschubgeschwindigkeit verändert. In diesem Beispiel soll die veränderte Richtung der Vorschubgeschwindigkeit parallel zur Rotationsachse 46 des Rades 23 verlaufen und zwar in einem Richtungssinn, der vom Spurkranz 70 des Rades 23 wegweist. Dies kann mit der Steuerung nach dem Ausführungsbeispiel wie folgt durchgeführt werden.
Es wird der vom Bearbeitungsprogramm vorgegebene Vorschub des Vorschubmotors 45 in Richtung der Z-Achse 8 und der vom Bearbeitungsprogramm vorgegebene Vorschub des Vorschubmotors 56 in Richtung der X-Achse 37 z.B. durch einen hierfür vorgesehenen Programmabschnitt, der bei Überschreitung einer vorgegebenen Schlupfgröße aufgerufen wird, gesperrt und das Drehwerkzeug verharrt augenblicklich in seiner letzten Position. Um nun die bisherige Richtung der Vorschubgeschwindigkeit so zu verändern, daß die Richtung parallel zur Rotationsachse 46 des Rades 23 verläuft und der Richtungssinn vom Spurkranz 70 wegweist, erhält nun der Impulsmischer 38 von der PLC-Steuerung 26 über Leitung 39 die Anweisung, Impulse über Leitung 41 an die CNC-Steuerung 40 abzugeben, durch die die CNC-Steuerung 40 veranlaßt wird, diese Änderung der Richtung der Vorschubgeschwindigkeit des Drehwerkzeuges 36 einzuleiten. Die CNC-Steuerung 40 gibt dafür über die Leitungen 42 und 43 und den Motorregler 44 die notwendigen Befehle an den Vorschubmotor 45. Eine Rückmeldung der Bewegung des Drehwerkzeuges 36 bzw. des Schlittens 69 erfolgt durch den Encoder 50 über Leitung 51, Impulsmischer 38 und Leitung 41. Das Drehwerkzeug 36 bzw. der Schlitten 69, der das Drehwerkzeug trägt, wird nun parallel zur Rotationsachse 46 des Radsatzes bzw. des Rades 23 von der Zerspanungsstelle wegweisend in Richtung der Z-Achse 8 weg gefahren. Ein Wegfahren des Drehwerkzeuges 36 bzw. des Schlittens 69 parallel zur Rotationsachse 46 reicht in vielen Fällen aus.

Die Länge des Rückzugsweges 10,17 (Figuren 1 und 2) des Drehwerkzeuges ist von der Anzahl der vom Impulsmischer eingemischten Impulse abhängig. Nach erfolgtem Rückzug steht das Drehwerkzeug still, während der Radsatz mit dem Rad 23 weiter rotiert. Am Ende des Rückzugsweges wird der Richtungssinn der Vorschubgeschwindigkeit wieder in Ausgangsrichtung umgekehrt. Diese Umkehrung geschieht wiederum mit Hilfe des Impulsmischers 38, der über Leitung 39 von der PLC-Steuerung 26 hierzu die Anweisung erhält. Die vom Impulsmischer 38 über Leitung 41, die zur CNC-Steuerung 40 führt, rückgemischten Impulse veranlassen die CNC-Steuerung 40 über die Leitungen 42 und 43 und über den Motorregler 44 eine solche Anweisung an den Vorschubmotor 45 zu geben, daß eine Vorschubgeschwindigkeit für die Z-Achse 8 des Schlittens 69 erzeugt wird, so daß das Werkzeug mit einem vorgegebenen Geschwindigkeitsbetrag wieder in seine Ausgangsposition zurückgeführt und von dort mit der im Bearbeitungsprogramm vorgesehenen urpsrünglichen Vorschubgeschwindigkeit oder mit einer in ihrem Betrag angepaßten Vorschubgeschwindigkeit weiter bewegt wird. Diese Vorschubgeschwindigkeit kann nun so ausgelegt sein, daß während angenähert einer Umdrehung des Rades 23 das Drehwerkzeug 36 den halben Betrag des vorherigen Vorschubweges pro Werkstückumdrehung zurücklegt. Diese Vorschubbewegung kann kontinuierlich während der Rotation des Rades 23 erfolgen. Es ist aber auch möglich, auf einem kurzen Umfangsabschnitt des Rades 23 dicht vor Vollendung einer auf den "Rückzug" des Werkzeuges folgenden Werkstückumdrehung diese Bewegung des Drehwerkzeuges 36 erfolgen zu lassen. Nach Beendigung dieser Bewegung beginnt das Drehwerkzeug 36 mit z.B. der halben bisherigen Spandicke 13 (siehe Figur 1) erneut die Zerspanung. Z.B. über die Schnittgeschwindigkeit und den Durchmessser des Rades 23 in der Zerspanungsebene kann von der Maschinensteuerung 27 auf einfache Weise erfaßt werden, wann eine Umdrehung des Rades 23 vollendet ist.

Etwa in dem Augenblick, in dem das Drehwerkzeug 36 die Zerspanung mit der halben bisherigen Spanungsdicke wieder aufnimmt, wird der Impulsmischer 38 von der PLC-Steuerung 26 über Leitung 39 veranlaßt, der CNC-Steuerung 40 über Leitung 41 Impulse zu geben, durch welche die CNC-Steuerung 40 veranlaßt wird, über die Leitungen 42, 43 und den Motorregler 44 dem Vorschubmotor 45 Anweisung zu geben, auf etwa dem halben Umfangsweg des Radumfanges den bisherigen Betrag der halben Vorschubgeschwindigkeit zu verdoppeln, so daß das Drehwerkzeug 36, betrachtet man als allgemeinen Fall Figur 1, bis Punkt 15 mit dieser Vorschubgeschwindigkeit an der Linie 14 der Figur 1 entlang abspant.

Der Punkt 15 in Figur 1 liegt, axial betrachtet, am Rad 23 in der gleichen Querschnittsebene 49 wie die Stelle 6. Die Beeinflussung der Bewegung des Drehwerkzeuges 36 durch den Impulsmischer 38 wird ab Punkt 15 eingestellt. Das Drehwerkzeug 36 befindet sich jetzt wieder in der von der CNC-Steuerung registrierten Position des Bearbeitungsprogrammes und die Vorschubsperre wird aufgehoben. Der Bearbeitungsvorgang kann jetzt z.B. mit einer angepaßten Vorschubgeschwindigkeit fortgesetzt werden.

Während der Zerspanung nach dem durch Programm vorgegebenen Arbeitsablauf wird der Vorschubmotor 56 über Leitungen 42', 43' und Motorregler 44' gesteuert und eine Rückmeldung erfolgt durch Encoder 55 und Leitung 59 an die CNC-Steuerung 40.

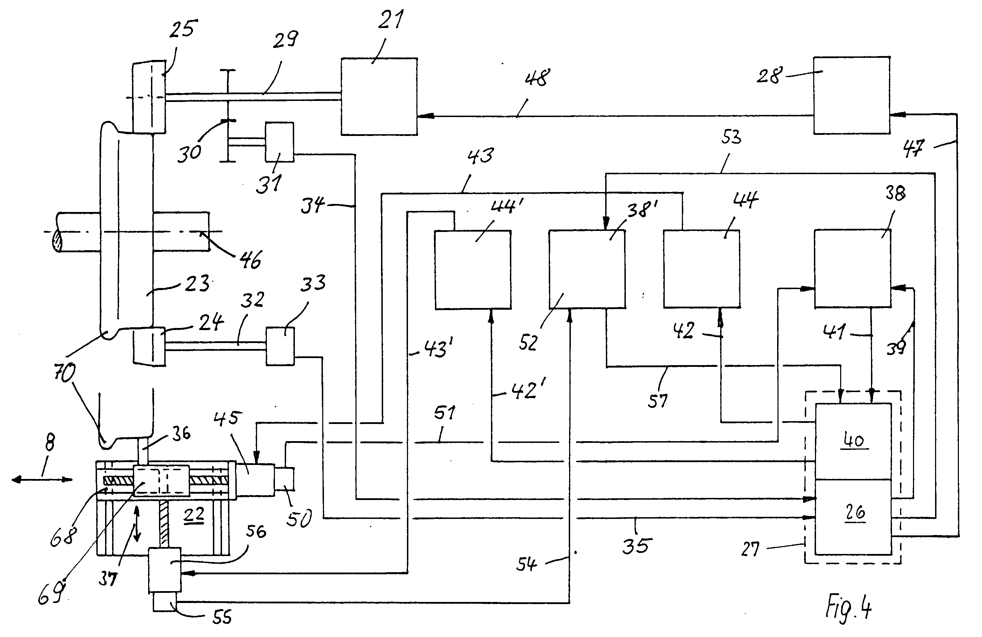

In Figur 4 ist ein ähnliches Schaltschema wie in Figur 3 dargestellt. Lediglich ein weiterer Impulsmischer 52, der über Leitungen 53 und 57 mit der PLC-Steuerung 26 und der CNC-Steuerung 40 sowie über Leitung 54 mit dem Encoder 55 des Vorschubmotors 56 verbunden ist, ist vorgesehen. Mit einer solchen Maschinensteuerung ist es möglich, den Richtungssinn der Vorschubgeschwindigkeit so zu verändern, daß sie "rückwärts" dem bisher zurückgelegten Vorschubweg folgt. Hierzu ist nur erforderlich, beide Impulsmischer 33 und 38', wie schon vorher zu Figur 3 für Impulsmischer 38 beschrieben, einzusetzen.
Es ist aber auch möglich, mit einer solchen Maschinensteuerung den Richtungssinn der Vorschubgeschwindigkeit so zu verändern, daß das Werkzeug in einer beliebigen Richtung vom Werkstück weggezogen wird. Das Drehwerkzeug kann hierbei in an sich bekannter Weise von einem Kreuzschlitten, gebildet von den Schlitten 69 und 68, bewegt werden, die auf einem Schlittenträger 22 angeordnet sind, der seinerseits z.B. auf einem Maschinenbett starr oder verschiebbar angeordnet sein kann.

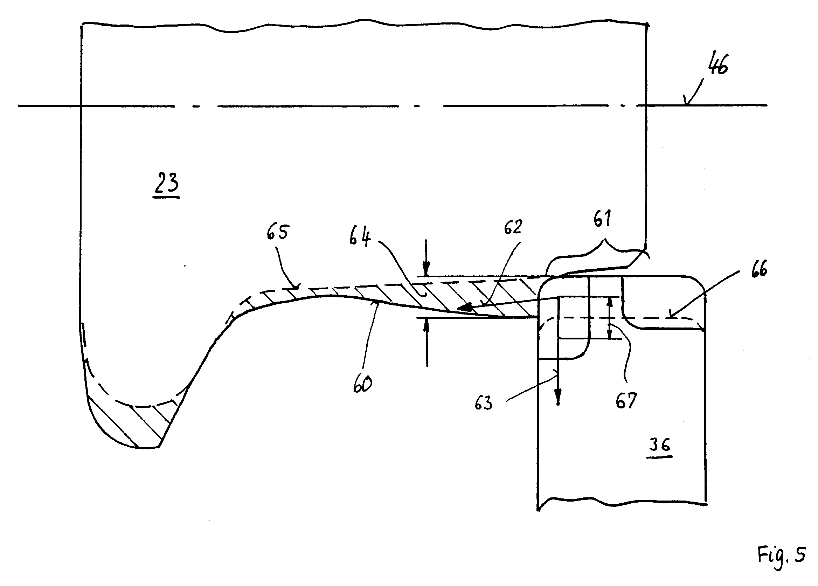

In Figur 5 ist das zu reprofilierende Profil 60 des Rades 23 dargestellt und es soll durch Zerspanen ein Neuprofil 65 hergestellt werden. Das Drehwerkzeug 36 hat den Bereich 61 des Rades 23 bereits reprofiliert. Die Richtung und der Richtungssinn der Vorschubgeschwindigkeit ist durch den Pfeil 62 dargestellt. Der Betrag der Vorschubgeschwindigkeit kann hier unbeachtet bleiben. Tritt nun eine Antriebssituation auf, die eine Regelung des Schlupfes zwischen Antriebsreibrolle 25 und Rad 23 (siehe Figuren 3 und 4) erforderlich macht, kann die Richtung der Vorschubgeschwindigkeit auch so verändert werden, daß diese senkrecht zur Rotationsachse 46 verläuft und der Richtungssinn von der Rotationsachse 46 bzw. vom Werkstück 23 wegweist. Diese veränderte Richtung und der Richtungssinn ist durch den Pfeil 63 dargestellt. Das Bearbeitungswerkzeug, welches mit einer momentanen Schnittiefe 64 am Rad 23 spanend angreift, kann nun voll oder auch nur teilweise aus der Schnittiefe 64 in Pfeilrichtung 63 herausgefahren werden. Hierbei kann die Vorschubbewegung in Richtung des Profilverlaufes bei Bedarf auch gestoppt werden. In jedem Fall ist eine Schlupfregelung möglich. Wird nun das Drehwerkzeug 36 in Pfeilrichtung 63 um den Betrag 67 der Schnittiefe 64 als vorgegebene Wegstrecke vom Werkstück weggefahren, und zwar in die gestrichelt dargestellte Position 66, ist die Zerspanung vollständig unterbrochen.
Nachdem nun diese Wegstrecke verfahren wurde, wird der bisherige Richtungssinn, dargestellt durch Pfeil 63, umgekehrt und das Drehwerkzeug bewegt sich mit einer ausgewählten Vorschubgeschwindigkeit zurück in die Ausgangsposition. Sobald diese Ausgangsposition erreicht ist, wird dann die Zerspanung entsprechend dem programmierten Bearbeitungsablauf wieder aufgenommen, wobei die dann angewendete Vorschubgeschwindigkeit kleiner sein kann als die vor der ersten Bewegungsrichtungsänderung des Drehwerkzeuges.

### Liste der verwendeten Bezugszeichen

- 1: Umfang
- 2: Werkstück
- 3: Ecke
- 4: Strecke
- 5: Vorschubrille
- 6: Stelle
- 7: Pfeilrichtung
- 8: Z-Achse
- 9: Pfeilrichtung
- 10: Rückzugsweg
- 11: Stelle
- 12: Linie
- 13: Spanungsdicke
- 14: Linie
- 15: Punkt
- 16: Spanungsdicke
- 17: Rückzugsweg
- 18: Stelle
- 19: Spanungsdicke
- 20: Linie
- 21: Hauptmotor
- 22: Schlittenträger
- 23: Rad
- 24: Stützrollen
- 25: Antriebsreibrolle
- 26: PLC-Steuerung
- 27: Maschinensteuerung
- 28: Motorregler
- 29: Welle
- 30: Getriebe
- 31: Impulsgeber
- 32: Welle
- 33: Impulsgeber
- 34: Leitung
- 35: Leitung
- 36: Drehwerkzeug
- 37: X-Achse
- 38: Impulsmischer
- 39: Leitung
- 40: CNC-Steuerung
- 41: Leitung
- 42: Leitung
- 42': Leitung
- 43: Leitung
- 43': Leitung
- 44: Motorregler
- 44': Motorregler
- 45: Vorschubmotor
- 46: Rotationsachse
- 47: Leitung
- 48: Leitung
- 49: Querebene
- 50: Encoder
- 51: Leitung
- 52: Impulsmischer
- 53: Leitung
- 54: Leitung
- 55: Encoder
- 56: Vorschubmotor
- 57: Leitung
- 58: Punkt
- 59: Leitung
- 60: Profil
- 61: Bereich
- 62: Pfeil
- 63: Pfeil
- 64: Schnittiefe
- 65: Neuprofil
- 66: Position
- 67: Betrag
- 68: Schlitten
- 69: Schlitten
- 70: Spurkranz

## Patentansprüche

1. Verfahren zur Begrenzung des Schlupfes zwischen Antriebsreibrolle (25) und Werkstück (23)beim Zerspanen mit einem einstellbaren Spanquerschnitt mittels eines eine Vorschubbewegung mit einer vorgebbaren Vorschubgeschwindigkeit ausführenden Drehwerkzeuges (36) auf einer Drehmaschine mit Reibrollenantrieb auf einen vorgebbaren Wert, wobei während des Antreibens der zwischen mindestens einer Antriebsreibrolle (25) und dem Werkstück (23) auftretende Schlupf ermittelt wird, worauf bei Überschreiten eines vorgegebenen Wertes des Schlupfes die Vorschubgeschwindigkeit des Bearbeitungswerkzeuges (36)beeinflußt wird, dadurch gekennzeichnet, daß bei Überschreitung eines vorgegebenen Wertes des Schlupfes der Spanquerschnitt mindestens für die Dauer eines Teiles einer Umdrehung des Werkstückes (23) durch entsprechende Änderung mindestens der Bewegungsrichtung der Vorschubbewegung des Drehwerkzeuges (36) verringert wird, wobei sich das Drehwerkzeug (36) in der geänderten Bewegungsrichtung mit vorgegebenem Geschwindigkeitsbetrag bewegt, mindestens solange, bis eine zulässige Größe des Schlupfes erreicht ist.

2. Verfahren nach Anspruch 1, dadurch gekennzeichnet, daß die Änderung der Bewegungsrichtung der Vorschubbewegung des Drehwerkzeuges (36) für eine vorgegebene Zeitdauer oder über eine vorgegebene Wegstrecke beibehalten wird.

3. Verfahren nach Anspruch 1, dadurch gekennzeichnet, daß der Spanquerschnitt um mindestens 5% verringert wird.

4. Verfahren nach einem der Ansprüche 1 bis 3, dadurch gekennzeichnet, daß die Bewegung des Drehwerkzeuges (36) in der geänderten Bewegungsrichtung für die Dauer höchstens eines Teiles einer Umdrehung des Werkstückes (23) beibehalten wird.

5. Verfahren nach Anspruch 1, dadurch gekennzeichnet, daß nach Abschluß der Verringerung des Spanquerschnittes der Spanquerschnitt wieder vergrößert wird bis zur Erreichung eines oberen Grenzwertes des Schlupfes.

6. Drehmaschine mit einer elektronischen Maschinensteuerung (27) zur Durchführung des Verfahrens nach einem der Ansprüche 1 bis 4, mit Mitteln (24; 25, 29, 21)für die drehantreibbare Aufnahme eines Werkstückes (23) sowie mit mindestens einer Antriebsreibrolle (25) für den Drehantrieb des Werkstückes (23), mit mindestens einem Schlittenträger (22) mit je über einen von einem mit der Maschinensteuerung (27) verbundenen Motorregler (44, 44') geregelten Motor (45, 45') angetriebenen Schlitten (68, 69) zur Bewegung eines Drehwerkzeuges (36) in zwei zueinander senkrechten Achsen (8, 37) und mit mindestens einer Einrichtung (30, 31, 34; 24, 32, 33, 35) zur Ermittlung des zwischen mindestens einer Antriebsreibrolle (25) und dem Werkstück (23) auftretenden Schlupfes, die mit der elektronischen eine CNC-Steuerung umfassenden Maschinensteurung (27) verbunden ist, sowie mit Mitteln (50, 55; 44, 44'; 38; 27) zur Beeinflussung der Vorschubgeschwindigkeit des Drehwerkzeuges (36), dadurch gekennzeichnet, daß die Motoren (45, 56) einen mit der CNC-Steuerung (27) über eine Leitung (51ö, 59) verbundenen Encoder (50, 55) aufweisen, wobei in mindestens einer diesen Leitungen (51) ein Impulsmischer (38) vorgesehen ist und wobei die Maschinensteuerung (27) eine PLC-Steuerung (26) aufweist, die ebenfalls mit dem Impulsmischer (38) verbunden ist, so daß der Impulsmischer Anweisungen von der PLC-Steuerung erhalten kann.

## Claims

1. Method of limiting to a pre-assigned value the slip between friction-driving roller (25) and workpiece (23) in the machine cutting of a workpiece with an adjustable chip cross-section by means of a rotary tool (36) which executes a feed movement with a pre-assigned feed speed on a rotary machine with friction roller drive, wherein during the driving the slip occurring between at least one friction-driving roller (25) and the workpiece (23) is determined, whereafter, in the event of a pre-assigned value of the slip being exceeded, the feed speed of the machining tool (36) is influenced, characterised in that in the event that a pre-assigned value of the slip is exceeded the chip cross-section is reduced at least for the extent of a part of one rotation of the workpiece (23) by appropriate alteration of at least the direction of movement of the feed motion of the rotary tool (36), and wherein the rotary tool (36) moves in the altered direction of movement with pre-assigned speed value at least until a permissible magnitude of slip is achieved.

2. Method according to claim 1, characterised in that the change in the direction of movement of the feed motion of the rotary tool (36) is maintained for a pre-assigned time period or over a pre-assigned path length.

3. Method according to claim 1, characterised in that the chip cross-section is reduced by at least 5%.

4. Method according to one of claims 1 to 3, characterised in that the movement of the rotary tool (36) in the changed direction of movement is maintained for the extent of a part of one rotation of the workpiece (23) at the most.

5. Method according to claim 1, characterised in that after cessation of the reduction of the chip cross-section the chip cross-section is increased again until the achievement of an upper limit value for the slip.

6. Rotary machine with an electronic machine control (27) for carrying out the method according to one of claims 1 to 4, comprising means (24; 25, 29, 21) for the rotational driving take-up of a workpiece (23) as well as at least one friction driving roller (25) for the rotational driving of the workpiece (23), at least one slide carrier (22) with slides (68, 69) for moving a rotary tool (36) on two axes (8, 37) which are perpendicular to each other, said slides being driven each by way of a motor (45, 45') controlled by a motor controller (44, 44') connected to the machine control (27), and at least one device (30, 31, 34; 24, 32, 33, 35) for determining the slip occurring between at least one friction-driving roller (25) and the workpiece (23), said device being connected to the electronic machine control (27) which includes a CNC-control, as well as means (50, 55; 44, 44'; 38; 27) for influencing the feed speed of the rotary tool (36), characterised in that the motors (44, 56) comprise an encoder (50, 55) connected to the CNC-control (27) by way of a connector (51ö, 59), wherein in at least one of these connectors (51) there is provided a pulse mixer (38), and wherein the machine control (27) includes a PLC-control (26) which also is connected to the pulse mixer (38), so that the pulse mixer can receive commands from the PLC-control.

## Revendications

1. Procédé pour limiter à une valeur prédéterminée le glissement entre un galet d'entraînement (25) et une pièce à usiner (23), en cours d'usinage avec enlèvement de copeaux, avec une section de copeau réglable au moyen d'un outil tournant (36) exécutant un mouvement d'avancement avec une vitesse d'avancement prédéterminée, sur un tour comportant un entraînement par galets frottants, étant entendu que, pendant l'entraînement, on mesure le glissement, se produisant entre au moins un galet d'entraînement (25) et la pièce à usiner (23), après quoi, dans le cas d'un dépassement d'une valeur prédéterminée du glissement, on agit sur la vitesse d'avencement de l'outil d'usinage (36),
caractérisé en ce que, dans le cas d'un dépassement d'une valeur prédéterminée du glissement, la section de copeau est réduite, au moins pour la durée d'une partie d'une rotation de la pièce à usiner (23), par une modification correspondante au moins de la direction du mouvement d'avancement de l'outil de tournage (36), l'outil d'usinage (36) se déplaçant dans la direction de mouvement modifiée avec une valeur prédéterminée de la vitesse, au moins aussi longtemps qu'une grandeur permise du glissement n'a pas été atteinte.

2. Procédé suivant la revendication 1, caractérisé en ce que la modification de la direction du mouvement d'avancement de l'outil de tournage (36) est maintenue pour une durée prédéterminée, ou sur une course prédéterminée.

3. Procédé suivant la revendication 1, caractérisé en ce que la section de copeau est réduite d'au moins 5 %.

4. Procédé suivant l'une quelconque des revendications 1 à 3, caractérisé en ce que le mouvement de l'outil de tournage (36) dans la direction de mouvement modifiée est maintenu au plus pour la durée d'une partie d'une rotation de la pièce à usiner (23).

5. Procédé suivant la revendication 1, caractérisé en ce qu'après la fin de la réduction de la section de copeau, la section de copeau est de nouveau agrandie jusqu'à atteindre une valeur-limite supérieure du glissement.

6. Tour comportant une commande électronique de machine (27) pour exécuter le procédé suivant l'une quelconque des revendications 1 à 4, comportant des moyens (24; 25, 29, 21) pour recevoir une pièce à usiner (23) en l'entraînant en rotation, et comportant au moins un galet d'entraînement (25) pour entraîner en rotation la pièce à usiner (23), comportant au moins un support de chariot (22), comportant chacun un chariot (68, 69), entrainé par un moteur (45, 45') régulé par un régulateur de moteur (44, 45) relié à la commande de machine (27), pour faire déplacer un outil de tournage (36) suivant deux axes perpendiculaires l'un à l'autre (8, 37), et comportant au moins un dispositif (30, 31, 34; 24, 32, 33, 35) pour détecter le glissement se produisant entre au moins un galet d'entraînement (25) et la pièce à usiner (23), dispositif qui est relié à la commande électronique de machine (27), comprenant une commande CNC (commande numérique par ordinateur), et comportant également des moyens (50, 55; 44, 44'; 38; 27) pour agir sur la vitesse d'avencement de l'outil de tournage (36),
caractérisé en ce que les moteurs (45, 46) comportent un encodeur (50, 55) relié par un conducteur (51ö, 59) à la commande CNC, étant entendu que, dans au moins un de ces conducteurs (51), un mélangeur d'impulsions (38) est prévu et étant entendu que la commande de machine (27) présente une commande PLC (26) (commande par ordinateur à logique programmable), qui, de même, est reliée au mélangeur d'impulsions (38), de telle façon que le mélangeur d'impulsions puisse recevoir des instructions de la part de la commande PLC.
